## Europäisches Patentamt

## European Patent Office

## Office européen des brevets

(11) Veröffentlichungsnummer: **0 446 400 B1**

(12) **EUROPÄISCHE PATENTSCHRIFT**

(45) Veröffentlichungstag der Patentschrift: **14.06.95**

(51) Int. Cl.⁶: **F01N 3/02**, F02D 41/38, F02D 41/14

(21) Anmeldenummer: **90105019.5**

(22) Anmeldetag: **16.03.90**

(54) **Verfahren und Vorrichtung zum Regenerieren eines Russfilters.**

(43) Veröffentlichungstag der Anmeldung:
**18.09.91 Patentblatt 91/38**

(45) Bekanntmachung des Hinweises auf die Patenterteilung:
**14.06.95 Patentblatt 95/24**

(84) Benannte Vertragsstaaten:
**DE ES FR GB GR IT NL SE**

(56) Entgegenhaltungen:
EP-A- 0 220 484    EP-A- 0 260 031
DE-A- 3 532 284    DE-A- 3 832 790
US-A- 4 404 795    US-A- 4 881 369

PATENT ABSTRACTS OF JAPAN, Band 008,
Nr. 216 (M-329), 30. Oktober 1984;& JP-A-59
101 519 (TOYOTA JIDOSHA K.K.) 12-06-1984

(73) Patentinhaber: **Pattas, Konstantin N.,
Prof.Dr.-Ing.
73 Abelonon
GR-55535 Thessaloniki (GR)**

(72) Erfinder: **Pattas, Konstantin N., Prof.Dr.-Ing.
73 Abelonon
GR-55535 Thessaloniki (GR)**

(74) Vertreter: **Liesegang, Roland, Dr.-Ing. et al
FORRESTER & BOEHMERT
Franz-Joseph-Strasse 38
D-80801 München (DE)**

## Beschreibung

Die Erfindung betrifft ein Verfahren und eine Einrichtung zum Regenerieren eines Rußfilters, das in den Abgaskanal eines Dieselmotors eingebaut ist, mit den Merkmalen des Obergegriffs des Anspruchs 1.

Bei einem bekannten Verfahren dieser Art (EP-A-0 260 031) wird der Abgasstrom in Strömungsrichtung vor dem Rußfilter temperaturabhängig so geregelt, daß die Regenerierungstemperatur erreicht oder überschritten wird, um ein kontrolliertes Abbrennen des vom Rußfiltr abgeschiedenen Russes zu erreichen.

Bei einem anderen bekannten Verfahren (DE-A-3 532 284) werden die in einem Rußfilter aufgefangenen Feststoffbestandteile des Abgases in Regenerationsphasen abgebrannt, während welcher die zugeführte Kraftstoffmenge in der Höhe auf einen Wert begrenzt wird, der einen eine vollständige Verbrennung der Feststoffbestandteile sicherstellenden Sauerstoffgehalt im Abgas von etwa 3 bis 5 % bewirkt.

Der Erfindung liegt die Aufgabe zugrunde, ein Verfahren und eine Einrichtung der eingangs genannten Art zu schaffen, wobei einerseits eine vollautomatische Regenerierung im Betrieb des Dieselmotors und andererseits ein Schutz gegen unkontrolliertes Regenerieren, d.h. gegen ungewolltes Abbrennen des im Rußfilter abgeschiedenen Russes, erreicht werden soll.

Erfindungsgemäß wird diese Aufgabe durch ein Verfahren gemäß Patentanspruch 1 gelöst.

Gemäß einer ersten Ausführung dieses Verfahrens wird der abgeleitete Teilstrom des Abgases einer Abgasrückfürhung zugeführt, wobei Drosselung und Abgasrückführung derart eingestellt werden, daß sich hinter dem Rußfilter ein Luftverhältnis (Lambda) zwischen 1,2 und 1,3 einstellt.

Gemäß einer zweiten Ausführung des erfindungsgemäßen Verfahrens wird der Rußfilter aus dem Abgasstrom durch Umleiten des Abgasstromes über eine den Rußfilter überbrückende Bypassleitung zeitweilig ausgeschaltet.

Eine Einrichtung zum Durchführen des Verfahrens nach der Erfindung ist in Patentanspruch 5 angegeben.

Gemäß einer Weiterbildung dieser Einrichtung ist das Regelorgan als in eine Abgasrückführleitung eingebaute Drosselvorrichtung ausgebildet.

Gemäß einer anderen Weiterbildung der erfindungsgemäßen Einrichtung, bei der die Lambdasonde auch weggelassen sein kann, ist das Regelorgan als in eine Bypassleitung eingebautes Absperrventil ausgebildet.

Die Erfindung basiert auf den folgenden Erkenntnissen:
Versuche haben gezeigt, daß die Verbrennung des Kraftstoff-Luftgemisches im Dieselmotor bei einem Luftverhältnis Lambda = 1,2 bis 1,3 zu einem Restsauerstoffgehalt im Abgas in der Größenordnung von 5 bis 7% führt. Wird das Luftverhältnis auf einem Lambda-Sollwert wie angegeben gehalten, so kann es nach den Feststellungen des Erfinders nicht mehr zu einem unkontrollierten Abbrennen des am Rußfilter abgeschiedenen Russes kommen. Der Abgasstrom kann kontrolliert im Hauptstrom des Abgaskanales und/oder in einer Abgasrückführung gedrosselt werden, um ein kontrolliertes Regenerieren, d.h. Abbrennen des Russes, im Rußfilter zu erzielen.

Alternativ wird der Abgasstrom bei Erreichen kritischer Temperaturwerte um den Rußfilter selbsttätig herumgeleitet, so daß der Rußfilter vor einem unkontrollierten Abbrennen geschützt wird.

Die im Anspruch 1 angegebenen Soll-Abgastemperaturen werden vorteilhaft abhängig vom Druckabfall des Druckes im Abgasstrom über dem Rußfilter nach vorgegebenen Funktionen verändert.

Die Erfindung ist im folgenden anhand schematischer Zeichnungen an einem Ausführungsbeispiel mit weiteren Einzelheiten näher erläutert. Es zeigen:

Fig. 1     ein Schema einer Einrichtung zum Regenerieren eines Rußfilters für einen Dieselmotor gemäß der Erfindung,

Fig. 2     ein Diagramm, in welchem die Soll-Abgastemperaturen über dem Druckabfall des Druckes im Abgasstrom über dem Rußfilter aufgetragen sind, und

Fig. 3     eine Abwandlung einer Einrichtung gemäß der Erfindung.

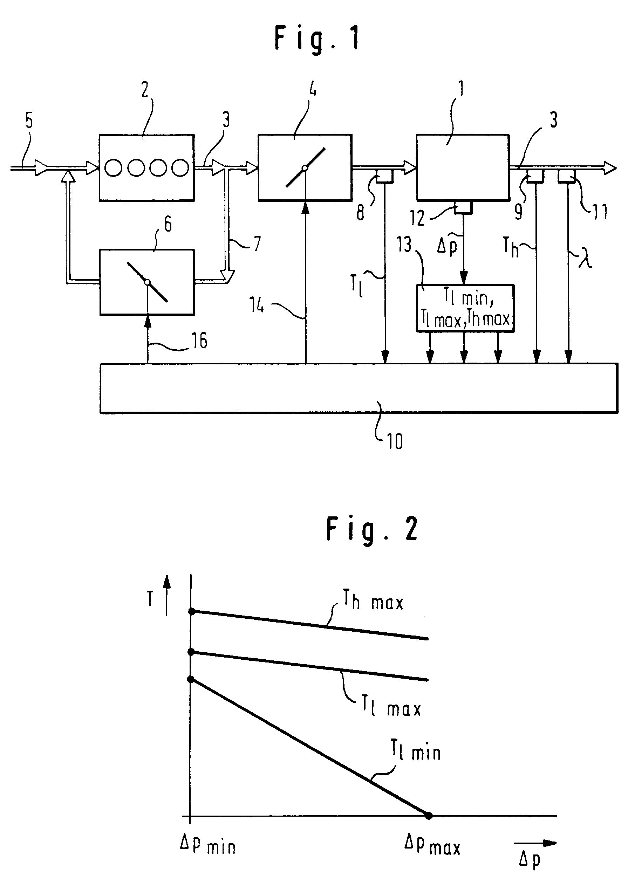

Fig. 1 zeigt ein Schema für die vollautomatische Regenerierung eines Rußfilters 1 für einen Dieselmotor 2, wobei das Rußfilter 1 in einen Abgaskanal 3 eingebaut ist. Zwischen dem Rußfilter 1 und dem Dieselmotor 2 ist eine einstellbare Drosselvorrichtung 4 in den Abgaskanal 3 eingebaut. Der Dieselmotor 2 wird über einen Einlaßkanal 5 mit der nötigen Verbrennungsluft versorgt.

Eine zweite einstellbare Drosselvorrichtung 6 ist in einen Abgasrückführkanal 7 eingebaut, der vom Abgaskanal 3 zwischen Dieselmotor 2 und der ersten Drosselvorrichtung 4 abzweigt und in den Einlaßkanal 5 mündet.

Vor und hinter dem Rußfilter 1 sind in den Abgaskanal 3 Temperaturfühler 8, 9 eingebaut, welche die Temperaturen $T_l$ und $T_h$ im Abgaskanal 3 messen und an eine Regeleinrichtung 10 als Eingangsgrößen abgeben. Ferner ist hinter dem Rußfilter 1 eine Lambda-Sonde 11 in den Abgaskanal eingebaut, die den Sauerstoffgehalt im Abgas mißt und deren Ausgangssignal ebenfalls in die Regeleinrichtung 10 eingegeben wird. Der gemessene Sauerstoffgehalt ist ein Maß für das Luftverhältnis. Schließlich dient ein bei 12 angedeuteter Differenzdruckfühler zum Messen des Druckabfalles $\Delta p$ über dem Rußfilter 1. Das Ausgangssignal des Differenzdruckfühlers 12 wird in einen Funktionsbaustein 13 eingegeben, in welchem Soll-Abgastemperaturen ermittelt werden, nämlich eine Mindest-Abgastemperatur $T_{lmin}$, bei deren Erreichen im Betrieb des Dieselmotors 2 automatisch ein Regenerierungsvorgang des Rußfilters 1 eingeleitet wird, eine Soll-Abgastemperatur $T_{lmax}$ vor dem Rußfilter 1, bei deren Überschreiten der Regenerierungsvorgang selbsttätig abgeschaltet wird, und eine Soll-Abgastemperatur $T_{hmax}$ hinter dem Rußfilter 1, bei deren Überschreiten eine Regenerierung des Rußfilters automatisch unterbunden wird. Die genannten Solltemperaturen werden in dem Funktionsbaustein 13 nach vorgegebenen Funktionen für die genannten Temperaturen abhängig von der Änderung des Druckabfalls $\Delta p$ über dem Rußfilter 1 verändert. Solche Funktionen sind in Fig. 2 beispielsweise linear verlaufend dargestellt.

Die Regelung in der Regeleinrichtung 10 führt zu Stellsignalen, welche über Stellsignalleitungen 14, 16 wahlweise oder gemeinsam an die beiden Drosselvorrichtungen 4,6 abgegeben werden, um dadurch das kontrollierte Regenerieren bzw. den gewünschten Schutz vor einem unkontrollierten Regenerieren des Rußfilters 1 auszulösen.

Die Regelung ist dadurch einfach, daß der Druckabfall $\Delta p$ nicht in einem bestimmten Drehzahlfenster im Betrieb des Dieselmotors 2 gemessen zu werden braucht. Mit anderen Worten handelt es sich bei dem mittels des Druckdifferenzfühlers 12 gemessenen Wert $\Delta p$ um einen beim jeweiligen Betriebszustand des Dieselmotors gemessenen momentanen Wert.

Die beispielsweise in Fig. 2 dargestellten Funktionen sind linear. Dabei hat die Funktion $T_{lmin} = f_3 (\Delta p)$ eine größere relative Neigung als die beiden anderen Funktionen, um den Regenerierbetrieb an den häufigen Fahrzeugbetrieb im "schleichenden" Verkehr anzupassen.

Das Kriterium der Absenkung von $T_{lmax}$ und $T_{hmax}$ ist dabei, die maximale Wandtemperatur des aus Keramikmaterial bestehenden Rußfilters während der Regenerierung etwa konstant zu halten, weil diese maximale Wandtemperatur umso höher wird, je höher die Beladung des Rußfilters ist.

Eine gröbere, jedoch erheblich einfachere Regelung läßt sich dadurch erzielen, daß die Soll-Abgastemperaturen $T_{hmax}$ und $T_{lmax}$ als konstant angenommen, d.h. nicht mit dem Druckabfall $\Delta p$ verändert werden, und $T_{lmin}$ stufenweise mit dem Druckabfall verändert wird.

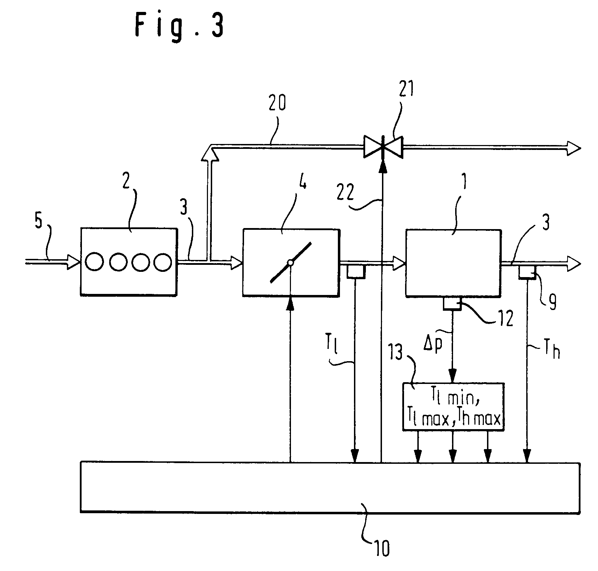

In Fig. 3 sind gleiche oder gleichwirkende Teile mit gleichen Bezugszeichen belegt und nicht nochmals beschrieben. Eine Lambda-Sonde und eine Abgasrückführung fehlen hier. Stattdessen zweigt hinter dem Dieselmotor vom Abgaskanal 3 eine Bypassleitung 20 ab, in die ein Absperrventil 21 eingebaut ist. Dieses alternativ nur Auf- und Zustellung realisierende Absperrventil wird von der Regeleinrichtung bei gleichzeitigem Schließen der Drosselvorrichtung 4 dann über die Signalflußleitung 22 zu einem Öffnen betätigt, wenn $T_{hmax}$ hinter dem Rußfilter 1 überschritten wird, so daß der Rußfilter selbsttätig aus dem Abgasstrom ausgeschaltet und somit vor einem unkontrollierten Abbrennen geschützt wird. Umgekehrt sind im Normalfall und zum Regenerieren des Rußfilters das Absperrventil 21 selbsttätig geschlossen und die Drosselvorrichtung 4 geöffnet gehalten. Die Regelung funktioniert im übrigen gleich wie anhand der Fig. 1 und 2 erläutert.

## Patentansprüche

1. Verfahren zum Regenerieren eines Rußfilters, das in den Abgaskanal eines Dieselmotors eingebaut ist, wobei das Abgas in Strömungsrichtung vor dem Rußfilter so gedrosselt wird, daß die Regenerierungstemperatur erreicht oder überschritten wird, dadurch **gekennzeichnet**, daß die Ist-Temperaturen ($T_l$ und $T_h$) des Abgases vor und hinter dem Rußfilter (1) gemessen werden,
daß bei Erreichen einer ersten Soll-Abgastemperatur ($T_{lmin}$) vor dem Rußfilter im Betrieb des Dieselmotors der Regenerierungsvorgang durch Drosseln eingeleitet wird,
daß bei Überschreiten einer zweiten Soll-Abgastemperatur ($T_{lmax}$) der Drosselvorgang rückgängig gemacht wird, und
daß bei Überschreiten einer vorgegebenen Abgastemperatur ($T_{hmax}$) hinter dem Rußfilter eine Regenerierung des Rußfilters durch gleichzeitiges erneutes Drosseln und Ableiten mindestens eines Teils des Abgasstromes vor der Drosselstelle unterbunden wird.

2. Verfahren nach Anspruch 1, dadurch **gekennzeichnet**, daß der abgeleitete Teilstrom des Abgases einer Abgasrückführung zugeführt wird, wobei die Drosselung und Abgasrückführung derart eingestellt werden, daß sich hinter dem Rußfilter ein Luftverhältnis $\lambda$ zwischen 1,2 und 1,3 einstellt.

3. Verfahren nach Anspruch 1, dadurch **gekennzeichnet**, daß der Rußfilter aus dem Abgasstrom durch Umleiten des Abgasstromes über eine den Rußfilter überbrückende Bypassleitung (20) in die Umgebung zeitweilig ausgeschaltet wird.

4. Verfahren nach einem, der Ansprüche 1 bis 3, dadurch **gekennzeichnet**, daß die soll-Abgastemperaturen ($T_{lmin}$, $T_{lmax}$, $T_{hmax}$) abhängig vom Druckabfall ($\Delta p$) über dem Rußfilter verändert werden.

5. Einrichtung zum Durchführen des Verfahrens nach Anspruch 1 zum Regenerieren eines Rußfilters, das in den Abgaskanal eines Dieselmotors eingebaut ist, wobei in strömungsrichtung vor dem Rußfilter (1) eine einstellbare Drosselvorrichtung (4) in dem Abgaskanal vorgesehen ist, mit Temperaturfühlern (8,9) zum Messen der Ist-Abgastemperaturen ($T_l$, $T_h$) im Abgaskanal (3) vor und hinter dem Rußfilter (1) und einer Regeleinrichtung (10), in welche als Eingangsgrößen die gemessenen Ist-Abgastemperaturen ($T_l$, $T_h$) und Soll-Abgastemperaturen ($T_{lmin}$, $T_{lmax}$, $T_{hmax}$) eingegeben werden und welche als Ausgangsgröße Stellsignale für die Drosselvorrichtung (4) abgibt, dadurch **gekennzeichnet**, daß vor der Drosselvorrichtung (4) eine Ableitung (7,20) mit eingebautem Regelorgan (6;21) vorgesehen ist.

6. Einrichtung nach Anspruch 5, dadurch **gekennzeichnet**, daß das Regelorgan als in eine Abgasrückführleitung (7) eingebaute Drosselvorrichtung (6) ausgebildet ist.

7. Einrichtung nach Anspruch 5, dadurch **gekennzeichnet**, daß das Regelorgan als ein in eine Bypassleitung (20) eingebautes Absperrventil (21) ausgebildet ist.

8. Einrichtung nach Anspruch 5 oder 6, dadurch **gekennzeichnet**, daß eine Lambda-Sonde (11) zum Messen des Sauerstoffgehalts im Abgas in Strömungsrichtung hinter dem Rußfilter (1) eingebaut ist.

**Claims**

1. A method of regenerating a soot filter incorporated in the exhaust duct of a diesel engine, the exhaust gas being so throttled in front of the soot filter in the direction of flow that the regeneration temperature is reached or exceeded, characterised in that the actual temperatures ($T_l$ and $T_h$) of the exhaust gas before and behind the soot filter (1) are measured, in that the regeneration process is initiated by throttling when a first set exhaust-gas temperature ($T_{lmin}$) is reached in front of the soot filter during operation of the diesel engine, in that the throttling operation is reversed when a second set exhaust-gas temperature ($T_{lmax}$) is exceeded, and

in that when a preset exhaust-gas temperature ($T_{hmax}$) is exceeded behind the soot filter, regeneration of the filter is stopped by renewed throttling and simultaneous diversion of at least a part of the exhaust-gas flow in front of the throttle.

2. A method according to claim 1, characterised in that the diverted partial flow of exhaust gas is supplied to a return line, the throttling and return being so adjusted that an air ratio $\lambda$ between 1.2 and 1.3 is obtained behind the soot filter.

3. A method according to claim 1, characterised in that the soot filter is temporarily disconnected from the stream of exhaust gas by diverting the stream into atmosphere through a bypass line (20) which bridges the soot filter.

4. A method according to any of claims 1 to 3, characterised in that the set exhaust gas temperatures ($T_{lmin}$, $T_{lmax}$, $T_{hmax}$) are varied in dependence on the pressure drop ($\Delta p$) through the soot filter.

5. A device for working the method according to claim 1 for regenerating a soot filter incorporated in the exhaust duct of a diesel engine, an adjustable throttle means (4) being provided in the exhaust duct in front of the soot filter (1) in the direction of flow, the device comprising temperature sensors (8, 9) for measuring the actual exhaust-gas temperatures ($T_l$, $T_h$) in the exhaust duct (3) before and behind the soot filter (1), and a control device (10) into which the measured actual exhaust-gas temperatures ($T_l$, $T_h$) and the set exhaust-gas temperatures ($T_{lmin}$, $T_{lmax}$, $T_{hmax}$) are supplied as input variables and which delivers an output variable in the form of signals for adjusting the throttle device (4), characterised in that a diversion means (7, 20) and an incorporated control means (6; 21) are provided in front of the throttle device (4).

6. A device according to claim 5, characterised in that the control means is a throttle device (6) incorporated in an exhaust-gas return pipe (7).

7. A device according to claim 5, characterised in that the control means is a shut-off valve (21) incorporated in a bypass pipe (20).

8. A device according to claim 5 or 6, characterised in that a lambda probe (11) for measuring the oxygen content in the exhaust gas is incorporated behind the soot filter (1) in the direction of flow.

## Revendications

1. Procédé de régénération d'un filtre à fumées, disposé dans le canal d'échappement des gaz d'un moteur diesel, les gaz d'échappement étant étranglés dans le sens de l'écoulement en amont du filtre à fumées de façon à ce que la température de régénération soit atteinte ou dépassée, caractérisé en ce que
l'on mesure les températures réelles ($T_l$ et $T_h$) des gaz d'échappement en amont et en aval du filtre à fumées (1),
l'on déclenche le processus de régénération par étranglement dès que la première température théorique ($T_l$ min) des gaz d'échappement en amont du filtre à fumées est atteinte pendant le fonctionnement du moteur diesel,
l'on arrête le processus d'étranglement dès que la deuxième température théorique ($T_l$ max) est dépassée, et que,
dès que la température prédéfinie des gaz d'échappement ($T_h$ max) en aval du filtre à fumées est dépassée, on arrête la régnération du filtre à fumées en procédant de nouveau et simultanément à un étranglement et en détournant au moins une partie du courant de gaz d'échappement en amont de l'étranglement.

2. Procédé selon la revendication 1, caractérisé en ce que l'on recycle le courant partiel de gaz d'échappement que l'on a détourné, l'étranglement et le recyclage des gaz d'échappement étant réglés de telle façon que se mette en place en aval du filtre à fumées un rapport lambda avec l'air compris entre 1, 2 et 1, 3.

3. Procédé selon la revendication 1, caractérisé en ce que l'on met momentanément le filtre à fumées hors du circuit des gaz d'échappement en faisant passer le courant de gaz d'échappement par un bipasse (20) court-circuitant le filtre à fumées et conduisant à l'atmosphère.

4. Procédé selon l'une des revendications 1 - 3, caractérisé en ce que l'on fait varier les températures théoriques des gaz d'échappement ($T_l$ min, $T_l$ max, $T_h$ max) en fonction de la chute de pression ($delta_p$) au niveau du filtre à fumées.

5. Dispositif de mise en oeuvre du procédé selon la revendication 1 permettant de régénérer un filtre à fumées, disposé dans le canal d'échappement des gaz d'un moteur diesel, un dispositif d'étranglement réglable (4) étant prévu dans le canal d'échappement des gaz, dans le sens de l'écoulement, en amont du filtre à fumées (1), comportant une sonde lambda (11) pour mesurer la teneur en oxygène des gaz d'échappement, des sondes thermiques (8, 9) pour mesurer les températures réelles ($T_l$, $T_h$), à l'intérieur du canal d'échappement des gaz, en amont et en aval du filtre à fumées (1) et un dispositif de régulation (10) auquel sont transmis, comme grandeurs d'entrée, les températures réelles mesurées des gaz d'échappement ($T_l$, $T_h$) et les températures théoriques des gaz d'échappement ($T_l$ min, $T_l$ max, $T_h$ max) et qui émet, comme grandeurs de sortie, les signaux de réglage du dispositif d'étranglement (4), caractérisé en ce que l'on prévoit en amont du dispositif d'étranglement (4) un bipasse (7, 20) dans lequel est disposé un organe de réglage (6, 21.

6. Dispositif selon la revendication 5, caractérisé en ce que ledit organe de réglage se présente sous la forme d'un dispositif d'étranglement (6) disposé à l'intérieur d'un conduit de recyclage des gaz d'échappement.

7. Dispositif selon la revendication 5, caractérisé en ce que ledit organe de réglage se présente sous la forme d'une vanne d'arrêt (21) placée sur le bipasse (20).

8. Dispositif selon les revendications 5 ou 6, caractérisé en ce que la sonde lambda (11) est disposée, dans le sens de l'écoulement, en aval du filtre à fumées (1).

# Fig. 1

# Fig. 2

Fig.3